# EUROPÄISCHE PATENTSCHRIFT

(11) **EP 1 156 323 B1**
(45) Veröffentlichungstag und Bekanntmachung des Hinweises auf die Patenterteilung: **05.07.2006**
(21) Anmeldenummer: 01108677.4
(22) Anmeldetag: 06.04.2001
(51) Int. Cl.: G01N 27/28

(54) **Sondeneinrichtung zur Aufnahme, Positionierung, Kalibrierung und/oder Wartung einer Messelektrode**
Probe device for reception, positioning, calibration and/or maintenance of a measuring electrode
Dispositif de sonde pour la récéption, le positionnement, la calibration et/ou la maintenance d'une électrode de mesure

(30) Priorität: 19.05.2000 DE 10024564
(43) Veröffentlichungstag der Anmeldung: 21.11.2001
(73) Patentinhaber: Knick Elektronische Messgeräte GmbH & Co. KG, D-14163 Berlin (DE)
(72) Erfinder: Schiffer, Jens, Dipl.-Ing., 14480 Potsdam (DE)
(74) Vertreter: Hübner, Gerd

(56) Entgegenhaltungen:
- EP-A- 0 372 121
- EP-A- 0 753 737
- DE-A- 3 643 036
- DE-A- 19 720 504
- DE-C- 4 207 845

## Beschreibung

Die Erfindung betrifft eine Sondeneinrichtung zur Aufnahme, Positionierung, Kalibrierung und/oder Wartung einer Meßelektrode zum Durchführen von Messungen in fluiden Medien, insbesondere für pH-, Redox- oder Leitfähigkeits- Messungen, mit den im Oberbegriff des Anspruches 1 angegebenen Merkmalen.

Zum Hintergrund und Verständnis der Erfindung ist auf die grundsätzliche Problematik bei den angegebenen Messungen kurz einzugehen. Als Beispiel sollen pH-Messungen in Flüssigkeiten näher erörtert werden. Hierzu werden vorzugsweise Glaselektroden verwendet, die in gewissen Zeitabständen selbsttätig durch die Zuführung von beispielsweise Spülmedien gereinigt oder durch Zuführung von Pufferlösungen kalibriert werden sollen. Dazu muß die Glaselektrode aus dem zu messenden Medium eines beispielsweise in der chemischen Industrie überwachten Prozesses in eine von diesem Prozeß abgeschlossene Kammer - der Kalibrierkammer - innerhalb der Sonde gebracht werden. Diese Kammer ist mit entsprechenden Zu- und Abflußleitungen zu verbinden, um die für die Reinigung, Spülung und Kalibrierung notwendigen Medien zuführen zu können.

Die Abdichtung der Kalibrierkammer muß - je nach Prozeß - bis zu 100 % gewährleistet sein, um eine Verunreinigung der zu messenden Flüssigkeit zu vermeiden. In diesem Zusammenhang kann die Abdichtung problematisch sein, da beispielsweise im Prozeßmedium befindliche Festkörperpartikel sich zwischen die Dichtpartner legen und die Dichtwirkung nachteilig beeinflussen können. Schließlich soll die Sondeneinrichtung eine möglichst hohe Sicherheit gegen Fehlbedienungen und Fehlfunktionen bieten. Dies bedeutet z. B., daß in einem Fehlerfall die Meßelektrode definiert und äußerlich erkennbar stehen bleiben soll. Eine versehentliche Demontage der Glaselektrode, insbesondere in deren Meßstellung, soll praktisch unmöglich sein. Schließlich ist erstrebenswert, daß für die Abdichtung zwischen zu messender Flüssigkeit und Umwelt über die Sondeneinrichtung mehrere unabhängige Dichtbarrieren vorhanden sind, um gewisse Sicherheitsreserven zu haben.

Eine derartige Sondeneinrichtung ist nun beispielsweise aus der DE 39 27 282 A1 oder DE 41 40 286 A1 bekannt. Dort ist eine Elektrodenhalterung für Eintauch-, Durchfluß- und Anbaumeßsysteme in der analytischen Chemie gezeigt, bei der die Meßelektrode zwischen einer ausgefahrenen Meßstellung und einer in ein Sondengehäuse zurückgezogenen Kalibrierstellung mittels eines Hubzylinderantriebes verschiebbar ist. Im Sondengehäuse ist eine Kalibrierkammer angelegt, die durch ein sogenanntes Küken - also im wesentlichen durch einen Absperrhahn - gegen die zu messende Flüssigkeit abdichtbar ist. Intern sind im Sondengehäuse Zu- und Abflußkanäle für Spül- und Kalibrierflüssigkeiten zu und aus dieser Kalibrierkammer vorgesehen.

Bei den Elektrodenhalterungen gemäß den beiden vorgenannten Druckschriften sind die Dichtverhältnisse aufgrund der Verwendung eines Absperrkükens insbesondere dann problematisch, wenn in der Prozeßflüssigkeit Festkörperpartikel enthalten sind.

Bei der Elektrodenhalterung gemäß DE 36 43 036 A1 wird vorgeschlagen, einen in der Betriebsstellung offenen und in einer Servicestellung geschlossenen Eichraum um den aktiven Elektrodenbereich dadurch zu schaffen, daß eine längsverschiebbare Hülse in einer Gleitführung der Elektrodenhalterung gelagert ist. Diese nimmt in ihrem Inneren den Elektrodenträger auf und steuert selbst durch Zwangssteuerung Längskanäle auf und verbindet diese mit Ventilanschlüssen im Steuerkopf der Armatur. Diese Längskanäle münden in den Eichraum, so daß in der Servicestellung entsprechende Medien, wie Wasser/Reinigungsmittel, Pufferlösungen für die Eichung und/oder Sterilisierungsmittel dem geschlossenen Eichraum zuführbar sind. In der Betriebsstellung sind sämtliche Ringräume, Dichtungsbereiche und Öffnungen der Armatur unter einem von innen nach außen wirkenden Preßluftdruck gestellt.

Bei dieser Elektrodenhalterung werden herkömmliche Dichtmittel, wie O-Ringe, verwendet, was insbesondere im Hinblick auf die Verschiebung der Gleitführung und die entsprechende Belastung der Dichtmittel problematisch ist.

Die DE 197 20 504 A1 schlägt in diesem Zusammenhang vor, bei einer durch einen Hubzylinderantrieb verschiebbaren Meßelektrode eine Abdichtung des Kalibrierraumes durch Keramik-Dichtbuchsen einerseits und eine Ausbildung der die Meßelektrode tragenden, verschiebbaren Innenhülse aus keramischem Material andererseits zu bewerkstelligen.

Eine ähnliche Meßelektrodenvorrichtung zeigt die DE 195 46 266 A1, bei der das Gehäuse, eine Innenhülse und eine Außenhülse aus Keramik hergestellt sind. Über die Außenhülse ist eine in der Innenhülse vorgesehene Meßkammer abschottbar. Dichthülsen aus Keramik werden als widerstandsfähiger als solche aus üblichen Dichtmaterialien bezeichnet.

Aus der DE 38 12 108 C2 schließlich ist eine Vorrichtung zum Messen insbesondere des pH-Wertes von Flüssigkeiten bekannt, bei der ein Kalibrierkammergehäuse mit einer Kalibrierkammer in das Meßmedium hinein steht. Die Öffnung der Kalibrierkammer, über die das Meßmedium darin einfließen kann, ist über einen auf- und abbewegbaren Verschlußdeckel dicht verschließbar. Die Zu- und Abführungsleitungen für die verschiedenen Kalibrierflüssigkeiten sind durch Kanäle in der der Kalibrierkammer zugewandten Oberfläche des Verschlußdeckels gebildet.

Der Erfindung liegt nun die Aufgabe zugrunde, eine Sondeneinrichtung der gattungsgemäßen Art so zu verbessern, daß eine zuverlässige Abdichtung der Kalibrierkammer in ihrer Kalibrierstellung und eine sichere Betätigung der Meßelektrode beim Verschieben zwischen ihrer Kalibrierstellung und der Meßstellung gewährleistet sind.

Diese Aufgabe wird durch die im Kennzeichnungsteil des Anspruches 1 angegebenen Merkmale gelöst. Als Kernstück der Anmeldung ist dabei im Sondengehäuse eine Drehschiebereinrichtung vorgesehen, die aus einem feststehenden Dichtteil und einem relativ dazu verdrehbaren Drehteil besteht. Im Dichtteil sind eine Ausfahröffnung für die Sondeneinrichtung, im Drehteil die Kalibrierkammer ausgebildet. In der Meßstellung stehen Kalibrierkammer und Ausfahröffnung über einander, in der Kalibrierstellung befinden sich diese beiden Teile außer Überdeckung. Zur Abdichtung der Kalibrierkammer in ihrer Kalibrierstellung sind Drehteil und Dichtteil mit planen, gegenseitig aneinanderliegenden Dichtflächen versehen, die Dichtpartner bilden. Diese Dichtflächen sind die Seitenflächen von Drehteil und Dichtteil, die die einander zugewandten Mündungsöffnungen von Kalibrierkammer und Ausfahröffnung umgeben. Vorzugsweise bestehen Dreh- und Dichtteil aus keramischen Scheiben oder sind zumindest im Bereich ihrer Dichtflächen mit einer keramischen Beschichtung versehen.

Aufgrund dieser speziellen Anordnung und Funktionsweise der Abdichtung der Kalibrierkammer zum Prozeß durch die relative Bewegung zweier planer Dichtscheiben zueinander, ist die erfindungsgemäße Sondeneinrichtung besonders zum Einsatz in schwierigen Medien geeignet, in denen standardmäßige bekannte O-Ring-Abdichtungen oder Keramik-Dichtbuchsen versagen. Als Beispiele sind hier Prozesse mit Festkörperanteilen oder Verschmutzungen sowie klebrige oder breiige Prozeßmedien z. B. in der Lebensmittelbranche zu nennen.

Die Unteransprüche kennzeichnen bevorzugte Weiterbildungen der Meßsonde, die sich im einzelnen aus der Beschreibung des Ausführungsbeispiels näher erschließen und mit ihren Merkmalen und Vorteilen zur Vermeidung von Wiederholungen an dieser Stelle nicht erörtert werden sollen.

Diese Beschreibung eines Ausführungsbeispiels bezieht sich auf die beigefügten Zeichnungen, in denen zeigen:
- Fig. 1: einen Längsaxialschnitt der Sondeneinrichtung in Kalibrierstellung der Meßelektrode,
- Fig. 2: einen Längsaxialschnitt analog Fig. 1 in der Meßstellung der Meßelektrode,

- Fig. 3: einen Axialschnitt gemäß der Schnittlinie A-A nach Fig. 2,
- Fig. 4: eine perspektivische Darstellung der Drehschiebereinrichtung der Sondeneinrichtung in Kalibrierstellung,
- Fig. 5: eine schematische Draufsicht auf die Drehschiebereinrichtung gemäß Fig. 4,
- Fig. 6: eine perspektivische Darstellung der Drehschiebereinrichtung in Meßstellung, und
- Fig. 7: eine schematische Draufsicht auf die Drehschiebereinrichtung gemäß Fig. 6.

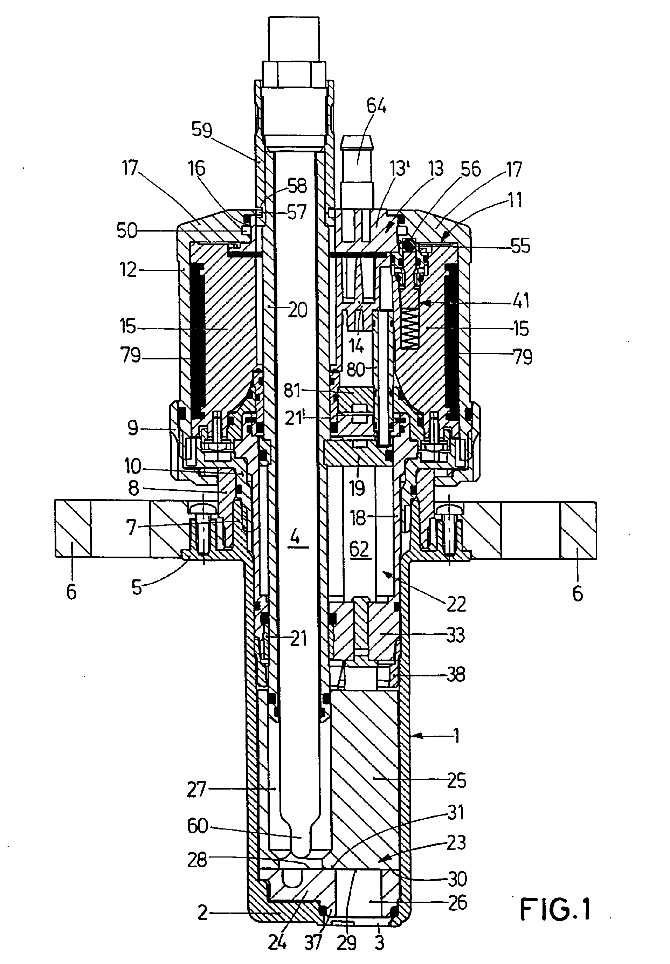

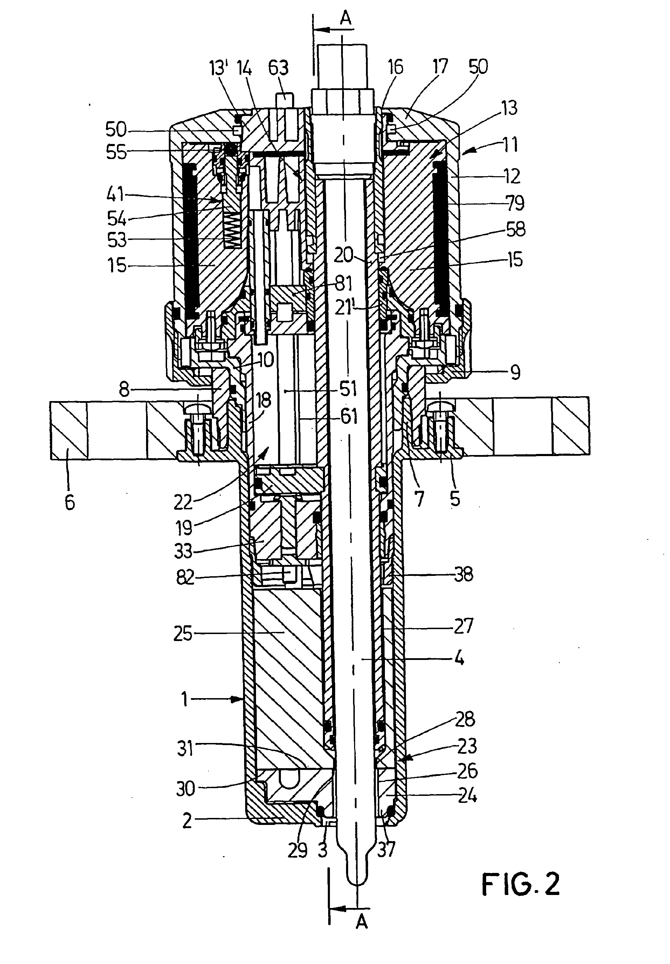

Anhand der Fig. 1 bis 3 ist der Grundaufbau der Sondeneinrichtung zu erläutern. So ist ein rohrförmiges Sondengehäuse 1 beispielsweise aus Kunststoff vorgesehen, das über eine nicht näher dargestellte Öffnung in einem Prozeßbehälter in eine zu messende Prozeßflüssigkeit eintauchbar ist. Das Sondengehäuse 1 ist an seinem eingetauchten Ende mit einem Boden 2 versehen, der exzentrisch eine Durchtrittsöffnung 3 für die im Sondengehäuse 1 angeordnete Meßelektrode 4 - beispielsweise eine typischerweise als Zukaufteil hinzugekommene Glaselektrode zur pH-Messung - aufweist. Am bodenabseitigen Ende ist das Sondengehäuse 1 mit einem umlaufenden Kragen 5 versehen, der mit einem Flansch 6 verschraubt ist. Dieser Flansch 6 stellt die sogenannte Prozeßadaption dar, über die die Sondeneinrichtung mit dem entsprechenden Prozeßbehälter verschraubbar ist. Statt eines Flansches kann auch beispielsweise eine sogenannte Milchrohrverschraubung vorgesehen sein. Ein Tragring 8 für eine Überwurfmutter 9 ist über den Flansch 6 mit dem Sondengehäuse 1 verschraubt. Mittels der Überwurfmutter 9 ist ein als Ganzes mit 11 bezeichneter Drehkolbenantrieb auf dem Sondengehäuse 1 montierbar. Der Drehkolbenantrieb 11 weist einen das äußere Gehäuse bildenden Drehzylinder 12 auf, der mit der Überwurfmutter 9 verschraubt und auf seiner offenen Seite mit einem Drehzylinderboden 10 abgeschlossen ist. Im Drehzylinder 12 ist ein Drehkolben 13 drehbar gelagert, der mit einem komplex aufgebauten Drehkolbenkern 14 und zwei davon abstehenden, den Arbeitsraum des Drehzylinders einnehmenden Drehkolbenflügeln 15 versehen ist. Im Drehzylinder 12 sind zwei nicht näher dargestellte feste Flügel stationär angeordnet, so daß sich in Verbindung mit den Drehkolbenflügeln 15 vier Arbeitsräume bilden. Von diesen sind jeweils zwei diametral gegenüberliegende Räume druckbeaufschlagt. Wie aus den Fig. 1 bis 3 deutlich wird, steht der Drehkolbendeckel 13' über eine Öffnung 16 durch den Deckel 17 des Drehzylinders 12 hindurch nach außen. Auf der gegenüberliegenden, unteren Seite ist der Drehkolbenkern 14 drehfest über ein Kopplungsteil 81 mit einem Hubzylinder 18 verbunden, der für den Vorschub der Meßelektrode 4 aus einer nicht näher dargestellten Ausfahrbereitstellung in die in Fig. 2 gezeigte, ausgefahrene Meßstellung sorgt. Dazu ist im Hubzylinder 18 ein Hubkolben 19 axial verschiebbar gelagert, der exzentrisch als Kolbenstange einen rohrförmigen Elektrodenhalter 20 trägt. Dieser Elektrodenhalter 20 nimmt die Meßelektrode 4 auf und durchmißt praktisch die gesamte axiale Länge des Sondengehäuses 1 und des Drehzylinders 12. Insoweit ist der Elektrodenhalter 20 über eine Buchse 21 im später zu erörternden Hubzylinder-Boden 33 und durch eine Buchse 21' im Drehkolbenkern 14 des Drehkolbenantriebes 11 axial verschiebbar geführt.

Der von Hubzylinder 18 und Hubkolben 19 gebildete Hubzylinderantrieb 22 sitzt etwa mittig bezogen auf die Axiallänge von Sondengehäuse 1 und Drehzylinder 12. Der verbleibende Raum zum prozeßseitigen Ende des Sondengehäuses 1 wird von einer als Ganzes mit 23 bezeichneten Drehschiebereinrichtung eingenommen, die aus einem im Sondengehäuse 1 feststehenden, unverdrehbaren Dichtteil 24 und einem darüber angeordneten Drehteil 25 besteht, die beide aus einem Keramikmaterial gefertigt sind. Das Dichtteil 24 ist eine flache Scheibe, die auf dem Boden 2 am unteren Ende des Sondengehäuses 1 drehfest angeordnet ist. Sie ist in axialer Richtung von einer exzentrischen Ausfahröffnung 26 für die Meßelektrode 4 durchsetzt, die mit der Durchtrittsöffnung 3 im Boden 2 fluchtet.

Das Drehteil 25 ist als Vollzylinder ausgelegt, der eine axial durchgehende, mit der gleichen Exzentrizität wie die Ausfahröffnung 26 angeordnete Bohrung aufweist, die die Kalibrierkammer 27 der Sondeneinrichtung bildet. Die einander zugewandten Mündungsöffnungen 29, 28 der Ausfahröffnung 26 bzw. Kalibrierkammer 27 sind von planen Dichtflächen 30, 31 des Dicht- bzw. des Drehteils 24, 25 umgeben. Diese beiden Dichtflächen 30, 31 bilden gegenseitige Dichtpartner zur Abdichtung der Kalibrierkammer 27 in der in Fig. 1 gezeigten Kalibrierstellung gegen die über die Ausfahröffnung 26 eintretende Prozeßflüssigkeit.

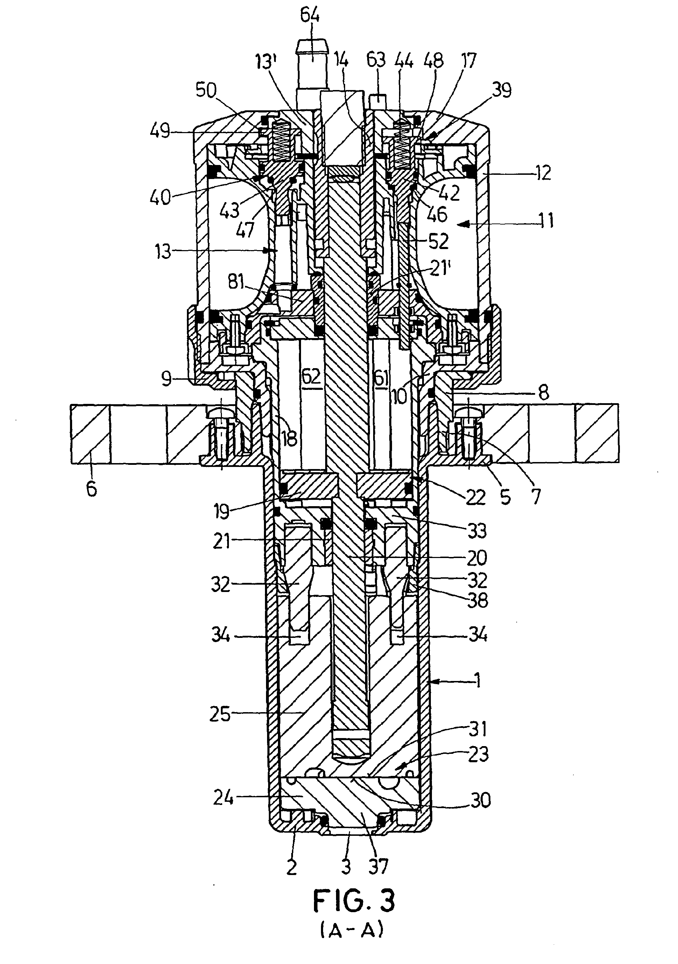

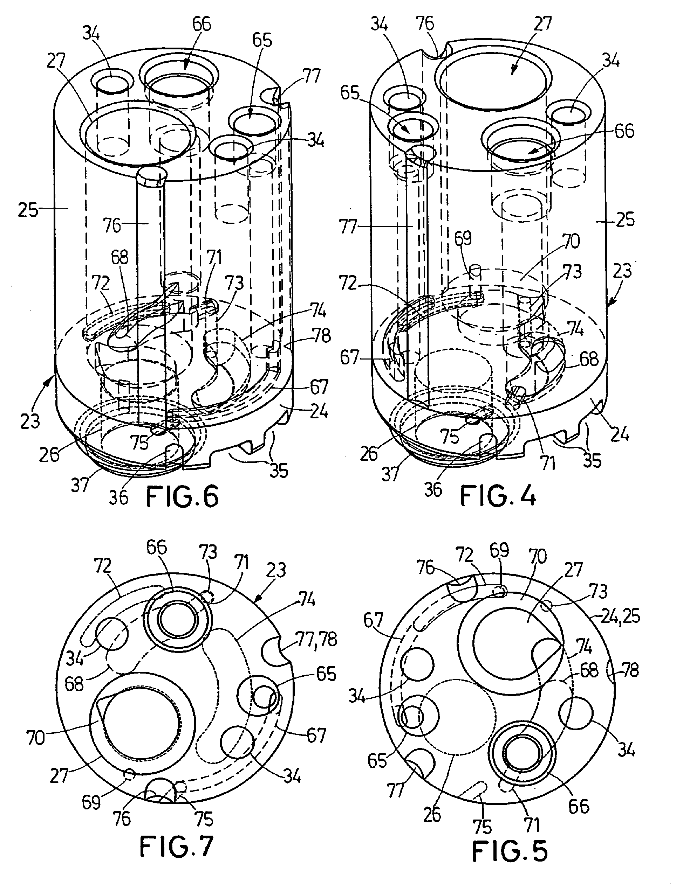

Wie aus Fig. 3 deutlich wird, wird die Verdrehung des Drehteils 25 durch Mitnehmer 32 ermöglicht, die in den Boden 33 des Hubzylinders 18 eingelassen und in entsprechende Ausnehmungen 34 (s. auch Fig. 4 bis 7) in der Oberseite des Drehteils 25 eingreifen. Um die Dichtwirkung zwischen den beiden Dichtflächen 30, 31 zu gewährleisten, sind zwischen dem Boden 2 des Sondengehäuses 1 und der Unterseite des Dichtteils 24 vier (nicht näher dargestellte) Druckfedern eingesetzt, die in Aussparungen 35 (Fig. 4 und 6) im Dichtteil 24 untergebracht sind. Letzteres weist ferner in seinem Außenumfang Nuten 36 auf, in die entsprechende Nasen an der Innenseite des Sondengehäuses 1 zur Verdrehsicherung des Dichtteils 24 eingreifen. Eine Dreharretierung ist auch durch den die Ausfahröffnung 26 umgebenden, flachen Ringstutzen 37 an der Unterseite des Dichtteils 24 unterstützt, der unter Zwischenlage eines entsprechenden O-Ringes in einen Dichtsitz um die Durchtrittsöffnung 3 im Boden 2 des Sondengehäuses 1 eingreift.

Als Konterteil für die Druckbeaufschlagung des Dicht- und Drehteils 24, 25 durch die erwähnten Druckfedern ist etwa auf halber Höhe im Sondengehäuse 1 ein Gewindering 38 eingedreht, gegen den sich das Drehteil 25 abstützt.

Anhand der Fig. 1 bis 3 soll nun die Funktionsweise des Dreh- und Hubantriebes 11, 22 der Meßelektrode 4 näher erläutert werden. Grundsätzlich wird für beide Antriebe Druckluft verwendet, die über nicht näher dargestellte Anschlüsse selektiv eingeleitet wird. Die Steuerung der einzelnen Antriebe erfolgt über drei Ventile, von denen zwei Ventile 39, 40 primär für die Zwangssteuerung des Drehkolbenantriebes 11 und ein Ventil 41 für die Steuerung des Hubzylinderantriebes 22 sorgen.

Die beiden Ventile 39, 40 sind etwa diametral gegenüberliegend im Drehkolbenkern 14 angeordnet und sind jeweils mit den in bzw. entgegen dem Uhrzeigersinn an die Drehkolbenflügel 15 angrenzenden Arbeitsräumen des Drehkolbenantriebes 11 verbunden. Ihr Ventilkörper 42, 43 ist jeweils über eine Druckfeder 44, 45 gegen einen Ventilsitz 46, 47 beaufschlagt. Beide Ventile weisen ferner am Kopfende ihres Ventilkörpers 42, 43 jeweils seitlich umlaufende Ringstege 48, 49 auf, die mit einer entsprechenden Verriegelungsnut 50 im Deckel 17 in noch näher zu erörternder Weise kooperieren.

Dem Ventil 39 ist im übrigen eine Schubstange 52 axial vorgelegt, die in den Kolbenraum des Hubzylinders 18 ragt und vom Hubkolben 19 bei dessen Einfahren in die eingezogene Endstellung beaufschlagt ist.

In der in Fig. 2 und 3 gezeigten Meßstellung der Meßelektrode 4 befindet sich der Hubzylinderantrieb 22 in seiner voll ausgefahrenen Stellung, d. h., daß der Hubkolben 19 am unteren Endes seines Verfahrweges steht. In dieser Stellung ist das rechte Ventil 39 geschlossen und verriegelt aufgrund des Eingriffes seines Ringsteges 48 in eine entsprechende Ausnehmung in der Verriegelungsnut 50 den Drehkolbenantrieb 11 gegen eine Verdrehung. Das Ventil 40 ist in seiner Offenstellung durch den Eingriff des Ringsteges 49 in die Verriegelungsnut 50 verriegelt.

Zum Einfahren der Meßelektrode 4 muß nun unter den Hubkolben Druckluft gebracht werden, was über ein Luftrohr 51 von einem Druckluftanschluß zum Boden 33 des Hubzylinders 18 bewerkstelligt wird. Der Hubkolben 19 fährt nach oben und nimmt den Elektrodenhalter 20 mit der Meßelektrode 4 mit. Bei Erreichen der eingefahrenen Endlage wird die Schubstange 52 betätigt, die das Ventil 39 öffnet und gleichzeitig die Dreharretierung des Drehkolbens 13 durch das Ausheben des Ringsteges 48 aus der entsprechenden Ausnehmung entriegelt. Über das Ventil 39 strömt in die entsprechenden Arbeitsräume des Drehkolbenantriebes 11 Druckluft, so daß der Drehkolben 13 verdreht wird. Dabei bleibt das Ventil 40 in seiner Offenstellung, so daß die in den komplementären Arbeitsräumen vorhandene Luft drucklos entweichen kann. Nach Erreichen der Endlage (Fig. 1) findet der Ringsteg 49 des Ventilkörpers 43 eine entsprechende Ausnehmung in der Verriegelungsnut 50, so daß das Ventil 40 geschlossen wird und wiederum eine Dreharretierung des Drehkolbenantriebes 11 erfolgt. Ventil 39 bleibt offen, da sein Ringsteg 48 in der Verriegelungsnut 50 gehalten wird.

Das erwähnte Ventil 41 dient zur Steuerung der Druckbeaufschlagung des Hubzylinderantriebes 22 in Ausfahrrichtung. Über eine Druckfeder 53 wird dabei sein Ventilkörper 54 in Schließrichtung nach oben beaufschlagt, wobei zwischen dem Ventilkörper 54 und dem Deckel 17 des Drehzylinders 12 eine Kugel 55 eingesetzt ist. Beim Verdrehen des Drehkolbenantriebes 11 aus der in Fig. 2 bzw. 3 gezeigten Drehstellung (Ausfahrbereitstellung) in die in Fig. 1 gezeigten Kalibrierstellung läuft die Kugel 55 an der Innenseite des Deckels 17 entlang, wobei sie kurz nach Verlassen der Ausfahrbereitstellung in eine teilumlaufende Nut 56 einläuft, wodurch das Ventil 41 geschlossen wird. Damit ist eine Druckluftzufuhr zum Hubzylinder 18 unterbunden, wodurch die Ausfahrbewegung "pneumatisch" verriegelt ist. Eine weitere Verriegelung ist mechanisch durch den Eingriff eines Randsteges 57 an der Öffnung 16 in eine entsprechende Nut 58 an der Elektrodenaufnahme 59 des Elektrodenhalters 20 gegeben. Damit wird verhindert, daß durch mechanischen Druck auf die Meßelektrode 4 deren Meßspitze 60 nach unten gegen das Dichtteil 24 geschoben und zerstört wird.

In dieser in Fig. 1 gezeigten Kalibrierstellung ist der Elektrodenhalter 20 mit seinem unteren Ende an das obere Ende der Kalibrierkammer 27 gezogen, so daß - in noch näher zu erörternder Weise - ein Reinigen und/oder Kalibrieren der Meßelektrode 4 in der so freigelegten Kalibrierkammer 27 erfolgen kann.

Der umgekehrte Ablauf des Überführens der Meßelektrode 4 von der Kalibrierstellung (Fig. 1) über die verdrehte Ausfahrbereitstellung in die Meßstellung (Fig. 2) gestaltet sich so, daß das Ventil 40 über die pneumatische Steuerung mit Druck in Öffnungsrichtung beaufschlagt wird. Da das Ventil 40 größer ausgelegt ist, als das Ventil 39, wirkt es selbst als eine Art Hubkolben, wobei die Gegenkraft der Druckfeder 45 nur dann aufgehoben und das Ventil 40 geöffnet wird, wenn ein bestimmter pneumatischer Mindestdruck anliegt. Dies verhindert, daß bei zu geringem Druck der Drehkolbenantrieb 11 zwar losfährt, dann aber in einer undefinierten Zwischenstellung verharrt. Durch das Öffnen des Ventils 40 werden nun die beiden anderen Arbeitsräume des Drehkolbenantriebes 11 beaufschlagt, wobei Ventil 39 offen bleibt und für ein Entweichen der Luft aus den nicht-beaufschlagten Arbeitsräumen sorgt. Während dieser Drehbewegung bleibt die Kugel 55 in der teilringförmigen Nut 56, so daß die Druckluftzufuhr zum Hubzylinder über das Ventil 41 nach wie vor unterbunden bleibt. Bei Erreichen der Endlage und damit der Ausfahrbereitstellung der Meßelektrode 4 (Drehstellung wie in Fig. 2, Hubstellung wie in Fig. 1), läuft die Kugel 55 aus der Nut 56 aus, das Ventil 41 wird geöffnet und es wird die Druckluft aus dem Drehantrieb über eine entsprechende Leitungsverbindung 80 im Drehkolbenkern 14 in den oberen Arbeitsraum des Hubzylinders 18 eingebracht. Der Hubzylinder 18 wird betätigt, sein Hubkolben 19 verschiebt die Meßelektrode 4 nach unten und taucht sie in den Prozeß ein (Fig. 2, 3).

Mit Erreichen der Drehendlage und beginnender Hubbewegung wird gleichzeitig das Ventil 39 geschlossen und dadurch in der bereits erläuterten Weise eine Drehverriegelung des Drehkolbenantriebes 11 erreicht. Damit ist wirkungsvoll vermieden, daß bei ausgefahrener Meßelektrode 4 der Drehkolbenantrieb 11 betätigt und die Meßelektrode 4 abgeschert wird.

Die Zu- und Abfuhr verschiedener Spül-, Reinigungs- und Kalibrierflüssigkeiten wird nun anhand der Fig. 3 bis 7 näher erörtert. So sind grundsätzlich eine Zuflußleitung 61 und eine Abflußleitung 62 für diese Medien vorgesehen, deren Anschlußstutzen 63, 64 aus dem Drehkolbendeckel 13' auf der Seite des Deckels 17 des Drehzylinders 12 herausstehen. Von dort aus führen die Zufluß- und Abflußleitungen 61, 62 axial durch den Drehkolbenkern 14 und den Hubzylinder 18 hindurch und münden in entsprechenden Zufluß- 65 und Abflußkanälen 66 im Drehteil 25. Der eigentliche Zuflußkanal 65 endet kurz vor der Dichtfläche 31 des Drehteils 25 und setzt sich dort in eine parallel zur Mantellinie über knapp 90 ° erstreckende Leitungsnut 67 in der Dichtfläche 31 fort. Das untere Ende des Abflußkanals 66 steht mit einer ebenfalls ungefähr parallel zur Mantellinie des Drehteils 25 verlaufenden, zum Abflußkanal 66 hin sich vertiefenden Leitungsnut 68 in Verbindung, die über einen Umfangswinkel von ca. 45 ° verläuft. Schließlich ist in Verlängerung des dem Zuflußkanal 65 entgegengesetzten Endes der Leitungsnut 67 eine kurze Steigleitung 69 vorgesehen, die mit der Kalibrierkammer 27 in Verbindung steht. Diese weist an ihrem unteren Ende eine teilringförmige Einschnürung 70 auf, die an einer Umfangsstelle zwickelförmig nach außen ausläuft. Zu der der Leitungsnut 68 abgewandten Richtung ist der Abflußkanal 66 noch mit einer kurzen Stichnut 71 in der Dichtfläche 31 versehen.

Das Dichtteil 24 ist auf seiner nach oben weisenden Dichtfläche 30 mit in Fig. 5 kurz strichlierten Strukturen versehen, nämlich der bereits erwähnten Ausfahröffnung 26 sowie weiteren Nuten und Bohrungen. So ist eine im selben Abstand von der Umfangslinie wie die Leitungsnut 67 und parallel zur Umfangslinie des Dichtteils 24 verlaufende Leitungsnut 72 in der Dichtfläche 30 angelegt, die sich über einen Winkel von etwa 45 ° erstreckt. In Verlängerung dieser Leitungsnut 72 ist eine axial durchgehende Bohrung 73 angelegt. Weiter erstreckt sich eine über einen Winkelbereich von etwa 60 ° verlaufende, der Leitungsnut 68 zugeordnete, breite Leitungsnut 74 seitlich neben der Ausfahröffnung 26. In Verlängerung dieser Leitungsnut 74 ist eine kurze Stichnut 75 vom Außenumfang des Dichtteils 24 weg nach innen vorgesehen.

In Fig. 4 und 5 ist nun die gegenseitige Zuordnung von Dichtteil 24 und Drehteil 25 in der in Fig. 1 dargestellten Kalibrierstellung erkennbar. So überdeckt sich die mit dem Zuflußkanal 65 in Verbindung stehende Leitungsnut 67 im Drehteil 25 teilweise mit der Leitungsnut 72 im Dichtteil, so daß die über den Zuflußkanal 65 herangeführte Reinigungs-, Spül- und/oder Kalibrierflüssigkeit bis zum zuflußfernen Ende der Leitungsnut 72 fließen kann. Über die Steigleitung 69 gelangt die Flüssigkeit dann in die Kalibrierkammer 27, wo sie verwirbelt und die entsprechenden Kalibrier- und Wartungsvorgänge an der Meßelektrode 4 durchgeführt werden können. Von der Kalibrierkammer 27 aus läuft die Flüssigkeit im Bereich des von der auslaufenden Einschnürung 70 gebildeten Zwickels in die Leitungsnut 74 im Dichtteil 24 hinein, wo sie weiter über die Leitungsnut 68 im Drehteil 25 in den Abflußkanal 66 und damit weiter in die Abflußleitung 62 gelangt. Die Leitungsnut 74 im Dichtteil und die Leitungsnut 68 im Drehteil bilden dabei im übrigen eine Leitung, deren Querschnitt sich mit zunehmendem Abstand von der Kalibrierkammer 27 kontinuierlich erweitert.

Bei der in Fig. 6 und 7 gezeigten Meßstellung, die durch eine Verdrehung von Dreh- 25 und Dichtteil 24 um ca. 140 ° eingenommen wird, findet eine interne Spülung der Hohlräume zwischen dem Sondengehäuse 1 und Dicht- und Drehteil 24, 25 statt. In dieser Drehstellung wird Spülflüssigkeit, z. B. Wasser, über den Zuflußkanal 65 zugeführt (Fig. 7 rechts), und tritt durch die Leitungsnut 67 in die kurze Stichnut 75 im Dichtteil 24 ein. Diese führt zur Umfangsfläche von Dicht- und Drehteil 24, 25, wobei im Drehteil 25 eine flache, axialparallele Vertiefung 76 an der Außenseite nach oben führt. Die Spülflüssigkeit wird dementsprechend in den Zwischenraum zwischen dem Boden 33 des Hubzylinders 18 und dem Drehteil 25 hindurchgeführt. Abgeführt wird die Spülflüssigkeit über eine weitere axialparallele Vertiefung 77 an der Außenseite des Drehteils 25, die sich in einer entsprechenden axialparallelen Vertiefung 78 am Dichtteil 24 fortsetzt. Die Spülflüssigkeit fließt somit in den Bereich zwischen dem Boden 2 des Sondengehäuses und dem Dichtteil 24 ein und führt dort ebenfalls zu einer Spülung und Reinigung der Hohlräume im Sondengehäuse 1. Schließlich tritt die sich unter dem Dichtteil 24 befindliche Spülflüssigkeit über die Bohrung 73 nach oben und gelangt in die kurze Stichnut 71, über die sie in den Abflußkanal 66 fließt. Erkennbar findet also während der Messung eine Spülung der Sondenhohlräume statt. Sollte nun ein Leck beispielsweise zwischen Dichtteil und Drehteil 24, 25 auftreten, so würde Prozeßflüssigkeit sich in die Spülflüssigkeit einmischen. Bei entsprechenden Fluiden kann somit durch eine Leitfähigkeitsmessung der verbrauchten Spülflüssigkeit eine Leckage festgestellt werden. Hierzu ist eine Leitfähigkeits-Meßzelle 82 (Fig. 2) im Hohlraum zwischen Hubzylinder-Boden 33 und Drehteil 25 vorgesehen. Im übrigen kann der beschriebene interne Spülvorgang kontinuierlich oder intermittierend durchgeführt werden.

In den Fig. 1 bis 3 sind alle herkömmlichen O-Ring-Dichtungen durch schwarz ausgefüllte Kreise gekennzeichnet, und sollen nicht eigens mit Bezugszeichen versehen werden, um die Übersichtlichkeit der Zeichnung nicht noch mehr zu beeinträchtigen. Die schwarz ausgefüllten Balken an den Drehkolben 15 in Fig. 1 stellen im übrigen die äußeren Dichtlippen 79 der Drehkolben 15 dar.

Zusammenfassend sind zur erfindungsgemäßen Sondeneinrichtung vielerlei Vorteile und Eigenschaften zu nennen:
- Durch die Verwendung keramischer Dicht- und Drehteile 24, 25 mit absolut planen Dichtflächen 30, 31 ist eine hohe Dichtwirkung und Zuverlässigkeit der Dichteigenschaften gewährleistet.
- Neben der ersten Dichtbarriere bei den Dichtflächen 30, 31 stellen die darüberliegenden Antriebsbaugruppen des Hubzylinderantriebes 22 und Drehkolbenantriebes 11 eigenständige Dichtbarrieren mit einer internen Spülmöglichkeit und Leckage-Überwachung dar.
- Durch das praktisch unmittelbare Aufeinanderpacken von Drehkolbenantrieb 11, Hubzylinderantrieb 22 und Drehschiebereinrichtung 23 ist eine besonders kompakte Bauform der Sondeneinrichtung gewährleistet. Damit sind unterschiedlichste Prozeßadaptionen möglich.
- Die die Prozeßflüssigkeit berührenden Teile der Sondeneinrichtung sind glattflächig und damit verschmutzungsunempfindlich.
- Durch die Zwangssteuerung von Dreh- und Hubantrieb der Meßelektrode sind Fehlbetätigungen und undefinierte Zwischenstände wirkungsvoll vermieden. Dadurch zeichnet sich die Sondeneinrichtung durch eine extrem große Betriebssicherheit aus.
- Bei einer geringen oder beginnenden Undichtigkeit des Sondenhohlraumes zum Prozeß kann durch eine vermehrte interne Spülung der Hohlräume die Betriebssicherheit der Sondeneinrichtung eine gewisse Zeit aufrechterhalten werden, z. B. um einen Chargenprozeß beenden zu können.

## Patentansprüche

1. Sondeneinrichtung zur Aufnahme, Positionierung, Kalibrierung und/oder Wartung einer Meßelektrode (4) zum Durchführen von Messungen in fluiden Medien, insbesondere für pH-, Redox-, oder Leitfähigkeits Messungen, mit
- einem in das fluide Medium eintauchbaren Sondengehäuse (1),
- einer Halterung (20) für die Meßelektrode (4), die zwischen einer aus dem Sondengehäuse (1) herausgefahrenen Meßstellung und einer in das Sondengehäuse (1) eingefahrenen Stellung mittels eines Hubantriebes (22) der Halterung (20) verschiebbar ist,
- einer Kalibrierkammer (27), in der die Meßelektrode (4) in einer Kalibrierstellung gegen das zu messende Medium abgedichtet positionierbar ist, und
- Zu- und Abflußkanälen (61, 62, 65, 66) für Spül- und Kalibrierflüssigkeiten zu und aus der Kalibrierkammer (27),
**gekennzeichnet durch**
- eine Drehschiebereinrichtung (23) im Sondengehäuse (1),
= mit einem eine Ausfahröffnung (26) für die Meßelektrode (4) bildenden, auf dem Boden (2) des Sondengehäuses feststehenden Dichtteil (24) und einem auf dem Dichtteil (24) sitenden, relativ dazu verdrehbaren, die Kalibrierkammer (27) aufnehmenden Drehteil (25),
= wobei die Kalibrierkammer (27) und die Ausfahröffnung (26) einander zugewandte Flündungen (28,29) aufweisen, die in der Meßstellung mit einander fluchten und in der Kalibrierstellung außer Fluchtung stehen,
= wobei diese einander zugewandten Mündungen (28, 29) von Kalibrierkammer (27) und Ausfahröffnung (26) in Drehteil (25) und Dichtteil (24) von gegenseitige Dichtpartner bildenden, planen Dichtflächen (30, 31) zur Abdichtung der Kalibrierkammer (27) in ihrer Kalibrierstellung umgeben sind, und
- eine Drehantriebseinrichtung (11), mittels derer die Halterung (20) der Meßelektrode (4) zusammen mit ihrem Hubantrieb (22) und dem Drehteil (25) der Drehschiebereinrichtung (23) zwischen der Kalibrierstellung und einer Ausfahrbereitstellung verdrehbar sind, aus der mittels des Hubantriebes (22) die Halterung (20) der Meßelektrode (4) in die Meßstellung ausfahrbar ist.

2. Sondeneinrichtung nach Anspruch 1, **dadurch gekennzeichnet, daß** Dreh- und Dichtteil (24, 25) der Drehschiebereinrichtung (23) aus keramischen Scheiben gebildet oder ihre Dichtflächen (30, 31) mit einer keramischen Beschichtung versehen sind.

3. Sondeneinrichtung nach Anspruch 1 oder 2, **dadurch gekennzeichnet, daß** das Dichtteil (24) gegen das Drehteil (25) axial mit einer Kraft beaufschlagt ist.

4. Sondeneinrichtung nach einem der Ansprüche 1 bis 3, **dadurch gekennzeichnet, daß** die Zu- und Abflußkanäle (65, 66) für die Spül- und Kalibrierffüssigkeiten von Bohrungen (69, 73) in sowie von Nuten (67, 68, 71, 72, 74, 75) an dem Dreh- und Dichtteil (24, 25) der Drehschiebereinrichtung (23) derart gebildet sind, daß mit der Verdrehung des Drehteils (25) relativ zum Dichtteil (24) beim Überführen der Meßelektrode (4) von der Kalibrier- in die Ausfahrbereitstellung sondeninterne Fluidverbindungen für die Kalibrierung bzw. Spülung des Sondeninneren auf- und zusteuerbar sind.

5. Sondeneinrichtung nach einem der Ansprüche 1 bis 4, **dadurch gekennzeichnet, daß** die Drehantriebseinrichtung von einem Drehkolbenantrieb (11) gebildet ist.

6. Sondeneinrichtung nach Anspruch 5, **dadurch gekennzeichnet, daß** mit dem Drehkolben (13) des Drehkolbenantriebs (11) koaxial ein Gehäuse (18) des als Hubzylinderantrieb (22) ausgebildeten Hubantriebes gekoppelt ist, an dem wiederum Mitnehmer (32) zur Drehbetätigung des koaxial damit liegenden Drehteils (25) der Drehschiebereinrichtung (23) angeordnet sind.

7. Sondeneinrichtung nach einem der Ansprüche 1 bis 6, **dadurch gekennzeichnet, daß** die Drehantriebseinrichtung (11) in einem vom Sondengehäuse (1) lösbaren Drehzylinder (12) untergebracht und zusammen mit dem Hubantrieb (22) und der Halterung (20) für die Meßelektrode (4) in der Kalibrierstellung demontierbar sind.

8. Sondeneinrichtung nach Anspruch 6, **dadurch gekennzeichnet, daß** eine Kolbenstange des Hubzylinderantriebes (22) exzentrisch zu dessen Gehäuselängsachse angeordnet ist und die Halterung (20) für die Meßelektrode (4) bildet.

9. Sondeneinrichtung nach Anspruch 5 oder 6, **dadurch gekennzeichnet, daß** der Drehkolbenantrieb (11) und der Hubzylinderantrieb (22) jeweils durch Steuerventile (39, 40, 41) derart zwangsgesteuert sind, daß bei Betätigung eines Antriebes (11 bzw. 22) der jeweils andere Antrieb (22 bzw. 11) blockiert ist.

10. Sondeneinrichtung nach Anspruch 9, **dadurch gekennzeichnet, daß** zur Zwangssteuerung die Steuerventile (39, 40, 41) in Abhängigkeit der Dreh- bzw. Hubstellung von Drehkolben- (11) bzw. Hubzylinderantrieb (22) mechanisch verriegelbar sind.

## Claims

1. Probe device for receiving, positioning, calibrating and/or maintaining a measuring electrode (4) for carrying out measurements in fluid media, in particular for pH, redox or conductivity measurements, comprising a probe housing (1) which may be immersed into the fluid medium, a holding device (20) for the measuring electrode (4) which may be displaced between a measuring position moved out of the probe housing (1) and a position moved into the probe housing (1) by a lifting drive (22) of the holding device (20), a calibrating chamber (27) in which the measuring electrode (4) may be positioned in a sealed manner against the medium to be measured in a calibrating position, and inflow and outflow channels (61, 62, 65, 66) for rinsing and calibrating liquids into and out of the calibrating chamber (27), **characterised by** a rotating sliding device (23) in the probe housing (1), which device (23) comprises a sealing part (24) which is fixed on the bottom of the probe housing and forms an exit opening (26) for the measuring electrode (4), and a rotating part (25) which accommodates the calibrating chamber (27), sits on the sealing part (24) and is rotatable relative thereto, the calibrating chamber (27) and the exit opening (26) having mutually facing openings (28, 29) which align with one another in the measuring position and are out of alignment in the calibrating position, these mutually facing openings (28, 29) in the calibrating chamber (27) and exit opening (26) in the rotating part (25) and sealing part (24) being surrounded by flat sealing surfaces (30, 31), forming mutual sealing partners, to seal the calibrating chamber (27) in the calibrating position thereof, and
**characterised by** a rotating drive device (11), by which the holding device (20) of the measuring electrode (4), together with the lifting drive (22) thereof and the rotating part (25) of the rotating sliding device (23) may be rotated between the calibrating position and a moving-out ready position, from which the holding device (20) of the measuring electrode (4) may be moved into the measuring position by the lifting drive (22).

2. Probe device according to claim 1, **characterised in that** rotating part (25) and sealing part (24) of the rotating sliding device (23) are formed by ceramic discs or the sealing surfaces (30, 31) thereof are provided with a ceramic coating.

3. Probe device according to claim 1 or 2, **characterised in that** the sealing part (24) is forced axially against the rotating part (25).

4. Probe device according to any one of claims 1 to 3, **characterised in that** the inflow and outflow channels (65, 66) for the rinsing and calibrating liquids are formed by holes (69, 73) in, as well as by grooves (67, 68, 71, 72, 74, 75) on, the rotating part (25) and sealing part (24) of the rotating sliding device (23), such that upon rotation of the rotating part (25) relative to the sealing part (24), while moving the measuring electrode (4) from the calibrating position into the moving-out ready position, fluid connections inside the probe may be controlled to be open or closed for the calibration or rinsing of the inside of the probe.

5. Probe device according to any one of claims 1 to 4, **characterised in that** the rotating drive device is formed by a rotary piston drive (11).

6. Probe device according to claim 5, **characterised in that** a housing (18) of the lifting drive configured as a lifting cylinder drive (22) is coupled coaxially to the rotary piston (13) of the rotary piston drive (11), tappets (32) being positioned on the lifting drive to activate the rotation of the rotating part (25), lying coaxially therewith, of the rotating sliding device (23).

7. Probe device according to any one of claims 1 to 6, **characterised in that** the rotating drive device (11) is housed in a rotating cylinder (12) which may be detached from the probe housing (1), and may be dismantled together with the lifting drive (22) and the holding device (20) for the measuring electrode (4) in the calibrating position.

8. Probe device according to claim 6, **characterised in that** a piston rod of the lifting cylinder drive (22) is positioned eccentrically to the housing longitudinal axis thereof and forms the holding device (20) for the measuring electrode (4).

9. Probe device according to claim 5 or 6, **characterised in that** the rotary piston drive (11) and the lifting cylinder drive (22) are each forcibly controlled by control valves (39, 40, 41) such that when one drive (11 or 22) is activated, the other drive respectively (22 or 11) is locked.

10. Probe device according to claim 9, **characterised in that** for forced control, the control valves (39, 40, 41) may be locked mechanically as a function of the rotating or lifting position of the rotary piston drive (11) or the lifting cylinder drive (22).

## Revendications

1. Dispositif de sonde pour la réception, le positionnement, le calibrage et/ou la maintenance d'une électrode de mesure (4) pour la réalisation des mesures dans des milieux fluides, en particulier pour les mesures de pH, de redox ou de conductibilité, avec
- un boîtier de sonde (1) pouvant être immergé dans le milieu fluide,
- une fixation (20) pour l'électrode de mesure (4) qui peut être coulissée entre une position de mesure hors du boîtier de sonde (1) et une position à l'intérieur du boîtier de sonde (1) au moyen d'un mécanisme de commande de levage (22) de la fixation (20),
- une chambre de calibrage (27) dans laquelle l'électrode de mesure (4) peut être positionnée de façon étanche dans une position de calibrage contre le milieu à mesurer, et
- des canaux d'entrée et de sortie d'écoulement (61, 62, 65, 66) pour des liquides de rinçage et de calibrage vers et en dehors de la chambre de calibrage (27),
**caractérisé par**
- un dispositif à tiroir rotatif (23) dans le boîtier de sonde (1),
avec une partie étanche (24) fixe au niveau du fond (2) du boîtier de la sonde formant un orifice de sortie (26) pour l'électrode de mesure (4) et une partie rotative (25) recevant la chambre de calibrage (27) reposant sur la partie étanche (24) rotative par rapport à celle-ci,
dans lequel la chambre de calibrage (27) et l'orifice de sortie (26) comprennent des ouvertures (28, 29) dirigées les unes vers les autres qui s'alignent les unes aux autres dans la position de mesure et qui sont déportées l'une par rapport à l'autre dans la position de calibrage,
dans lequel ces ouvertures (28, 29) dirigées les unes vers les autres de la chambre de calibrage (27) et de l'orifice de sortie (26) dans la partie rotative (25) et la partie étanche (24) sont entourées dans leur position de calibrage par des surfaces étanches (30, 31) planes coopérant mutuellement pour assurer l'étanchéité de la chambre de calibrage (27), et
- un dispositif de commande rotative (11) au moyen duquel la fixation (20) de l'électrode de mesure (4) conjointement à son mécanisme de commande de levage (22) et la partie rotative (25) du dispositif à tiroir coulissant (23) sont rotatives entre la position de calibrage et une position de sortie, à partir de laquelle la fixation (20) de l'électrode de mesure (4) peut être déplacée au moyen du mécanisme de commande de levage (22) dans la position de mesure.

2. Dispositif de sonde selon la revendication 1, **caractérisé en ce que** la partie rotative et la partie étanche (24, 25) du dispositif à tiroir coulissant (23) sont formées de disques en céramique ou leurs surfaces d'étanchéité (30, 31) sont dotées d'un revêtement céramique.

3. Dispositif de sonde selon la revendication 1 ou 2, **caractérisé en ce que** la partie étanche (24) est contrainte axialement avec une force contre la partie rotative (25).

4. Dispositif de sonde selon l'une des revendications 1 à 3, **caractérisé en ce que** les canaux d'entrée et de sortie d'écoulement (65, 66) pour les liquides de rinçage et de calibrage sont formés par des alésages (69, 73) ainsi que par des rainures (67, 68, 71, 72, 74, 75) sur la partie rotative et la partie étanche (24, 25) du dispositif à tiroir coulissant (23), de telle sorte que, avec la rotation de la partie rotative (25) par rapport à la partie étanche (24) lors du passage de l'électrode de mesure (4) de la position de calibrage à la position de sortie, les connexions fluidiques internes à la sonde pour le calibrage et/ou le rinçage de l'intérieur de la sonde peuvent être ouvertes et fermées.

5. Dispositif de sonde selon l'une des revendications 1 à 4, **caractérisé en ce que** le dispositif de commande rotative est formé par un mécanisme de commande de piston rotatif (11).

6. Dispositif de sonde selon la revendication 5, **caractérisé en ce qu'**un boîtier (18) du mécanisme de commande de levage configuré comme une commande à vérin hydraulique (22) est couplé coaxialement au piston rotatif (13) du mécanisme de commande de piston rotatif (11), contre lequel sont disposés des entraîneurs (32) pour l'actionnement rotatif de la partie rotative (25) du dispositif à tiroir coulissant (23) située coaxialement à ceux-ci.

7. Dispositif de sonde selon l'une des revendications 1 à 6, **caractérisé en ce que** le dispositif de commande rotative (11) est situé dans un cylindre rotatif (12) pouvant être séparé du boîtier de la sonde (1), et conjointement avec le mécanisme de commande de levage (22) et la fixation (20) pour l'électrode de mesure (4) sont démontables dans la position de calibrage.

8. Dispositif de sonde selon la revendication 6, **caractérisé en ce qu'**une tige de piston du mécanisme de commande de cylindre de levage (22) est disposée de manière excentrée par rapport à son axe longitudinal de boîtier et forme la fixation (20) pour l'électrode de mesure (4).

9. Dispositif de sonde selon la revendication 5 ou 6, **caractérisé en ce que** le mécanisme de commande de piston rotatif (11) et le mécanisme de commande de cylindre de levage (22) sont commandés de manière forcée par des soupapes de commande (39, 40, 41), de sorte que l'autre mécanisme de commande (22 et/ou 11) respectif est bloqué lors de l'actionnement d'un mécanisme de commande (11 et/ou 22).

10. Dispositif de sonde selon la revendication 9, **caractérisé en ce que**, pour la commande forcée, les soupapes de commande (39, 40, 41) peuvent être verrouillées mécaniquement en fonction de la position rotative et/ou de la position de levage du mécanisme de commande de piston rotatif (11) et/ou du cylindre de levage (22).
